(19) Europäisches Patentamt
European Patent Office
Office européen des brevets

(11) **EP 3 378 280 B1**

(12) **EUROPÄISCHE PATENTSCHRIFT**

(45) Veröffentlichungstag und Bekanntmachung des Hinweises auf die Patenterteilung:
**28.10.2020 Patentblatt 2020/44**

(21) Anmeldenummer: **16794635.9**

(22) Anmeldetag: **11.11.2016**

(51) Int Cl.:
*H05B 3/00* (2006.01)          *H05B 3/26* (2006.01)
*H05B 3/66* (2006.01)          *F27B 9/06* (2006.01)
*F27D 11/00* (2006.01)

(86) Internationale Anmeldenummer:
**PCT/EP2016/077455**

(87) Internationale Veröffentlichungsnummer:
**WO 2017/084980 (26.05.2017 Gazette 2017/21)**

(54) **INFRAROTSTRAHLER**

INFRARED RADIATOR

RADIATEUR À INFRAROUGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.11.2015 DE 102015119763**

(43) Veröffentlichungstag der Anmeldung:
**26.09.2018 Patentblatt 2018/39**

(73) Patentinhaber:
• **Heraeus Noblelight GmbH**
  **63450 Hanau (DE)**
• **Heraeus Quarzglas GmbH & Co. KG**
  **63450 Hanau (DE)**

(72) Erfinder:
• **GAAB, Lotta**
  **64289 Darmstadt (DE)**
• **NIELSEN, Nils Christian**
  **67307 Göllheim (DE)**
• **SCHEICH, Gerrit**
  **63500 Seligenstadt (DE)**
• **WEBER, Jürgen**
  **63801 Kleinostheim (DE)**
• **WESSELY, Frank**
  **64807 Dieburg (DE)**

(74) Vertreter: **Staudt, Armin Walter**
  **Sandeldamm 24a**
  **63450 Hanau (DE)**

(56) Entgegenhaltungen:
US-A- 5 643 483          US-A- 6 118 109
US-A1- 2004 190 882          US-A1- 2015 132 511

EP 3 378 280 B1

## Beschreibung

### Technisches Gebiet

Die vorliegende Erfindung betrifft einen Infrarotstrahler, insbesondere einen Infrarot-Flächenstrahler, mit einem Substrat aus einem elektrisch isolierenden Werkstoff, das eine Oberfläche aufweist, die in Kontakt mit einer Leiterbahn aus einem elektrisch leitenden und bei Stromdurchfluss Wärme erzeugenden Widerstandsmaterial ist.

Infrarotstrahler sind häufig mit einem elektrischen Widerstandselement aus einem Widerstandsmaterial ausgestattet, das bei Stromdurchfluss Wärme erzeugt. Bei bestimmten Ausführungsformen bildet das elektrische Widerstandselement selbst das eigentliche Heizelement des Infrarotstrahlers. Bei anderen Ausführungsformen, die Gegenstand der vorliegenden Erfindung sind, dient das Widerstandselement, wie etwa ein Draht, eine Bahn oder eine Schicht aus dem Widerstandsmaterial, zur Erwärmung eines anderen Bauteils, das hier als "Substrat" bezeichnet wird. Der Wärmetransport vom elektrischen Widerstandselement zu dem Substrat kann auf Wärmeleitung, Konvektion und/oder Wärmestrahlung beruhen.

Infrarotstrahler zeigen eine punkt- oder linienförmige Abstrahlcharakteristik für die Infrarotstrahlung, oder - als Infrarot-Flächenstrahler - eine flächig ausgedehnte zwei- oder dreidimensionale Abstrahlcharakteristik, die an die Geometrie der zu beheizenden Oberfläche des Heizguts angepasst eine homogene Bestrahlung zwei- oder dreidimensional gestalteter Oberflächen ermöglicht.

### Stand der Technik

In Infrarot-Flächenstrahlern werden in der Regel rohrförmige Infrarotlampen eingesetzt, bei denen ein wendelförmiger Widerstandsdraht mit Abstand und ohne wesentlichen Kontakt von einem Hüllrohr aus Quarzglas umgeben ist. Beispielsweise ist bei dem aus der DE 10 2011 012 363 A1 bekannten IR-Flächenstrahler eine Vielzahl einzelner Infrarotlampen zu einer flächigen Lampenanordnung zusammengefasst, deren Geometrie an die des Heizguts angepasst ist. Die Infrarotlampen sind dabei rückseitig in eine Masse aus opakem Quarzglas eingebettet, die als diffuser Reflektor wirkt. Das Ensemble aus reflektierender Quarzglasmasse und flächiger IR-Lampenanordnung bildet eine Baueinheit, bei der das Quarzglas als Fügemasse zur Fixierung der Lampenrohre untereinander und gleichzeitig als Reflektor dient.

Bei dieser Ausführungsform des IR-Flächenstrahlers erfolgt sowohl die Wärmeübertragung vom stromdurchflossenen Widerstandsdraht auf das Quarzglas-Lampenrohr als auch die Wärmeübertragung auf das Heizgut nahezu ausschließlich durch Strahlung, weniger durch Konvektion oder Wärmeleitung. Dabei stellt sich grundsätzlich das Problem, die zur Verfügung stehende Bestrahlungsleistung möglichst effektiv (mit hoher Leistungseffizienz) und gleichzeitig mit hoher Homogenität auf das Heizgut abzustrahlen. Dafür spielt der Abstand zwischen dem Heizgut und den einzelnen Infrarotlampen des Flächenstrahlers eine wichtige Rolle. Eine empirische Faustformel besagt, dass der für eine homogene Bestrahlung erforderliche Mindestabstand etwa dem 1,5-fachen des Mittenabstands der einzelnen Infrarotlampen entspricht. Demnach sind für eine homogene Bestrahlung ein geringer Abstand zwischen den einzelnen Infrarotlampen und ein großer Abstand zwischen Flächenstrahler und Heizgut förderlich. Der erst genannten Alternative (enger Lampen-Lampen-Strahler-Abstand) sind physikalische und technologische Grenzen gesetzt und sie zieht höhere Fertigungskosten für den Flächenstrahler nach sich. Die zweitgenannte Alternative (großer Infrarotstrahler-Heizgut-Abstand) führt zu einem geringeren Wirkungsgrad der eingesetzten Bestrahlungsleistung und einer vergleichsweise geringen Strahlungsleistung pro Heizflächeneinheit.

Eine gewisse Verbesserung in Bezug auf den Wirkungsgrad der Wärmeübertragung ergibt sich bei der aus WO1999/025154 A1 bekannten Ausführungsform eines Infrarot-Flächenstrahlers, bei dem ein flächiges, planares, rohr- oder polyederförmiges Substrat aus Quarzglas eingesetzt wird, das in direktem und kontinuierlichen Kontakt mit einem elektrischen Widerstandselement steht. Das Widerstandselement hat beispielsweise Mäanderform und wird über Folien-, Siebdruck- oder Dünnschichttechnik auf die Substrat-Heizfläche aufgebracht und anschließend eingebrannt.

Aus der US 5,643,483 A ist eine Heizeinrichtung für Wafer bekannt, bei der das Substrat als Rechteckplatte aus synthetisch erzeugtem Quarzglas besteht. Die dem Wafer abgewandte Unterseite der Substratplatte wird sandgestrahlt und auf der so aufgerauten Fläche wird eine Leiterbahn in Form einer Doppelspirale mittels Siebdruck einer Platin-Silber-Paste aufgebracht.

Bei den beiden zuletzt beschriebenen Ausführungsformen erhitzt das Heizelement nicht ein umgebendes Hüllrohr, sondern durch unmittelbaren und flächig ausgedehnten Kontakt in Form der Leiterbahn direkt das Quarzglas-Substrat, so dass der Wärmeübertrag zwischen Heizelement und Substrat überwiegend durch Wärmeleitung und Konvektion erfolgt, was sich auf die Leistungseffizienz positiv auswirken kann.

Quarzglas besitzt eine gute Korrosions-, Temperatur- und Temperaturwechselbeständigkeit und es steht in hoher Reinheit zur Verfügung. Daher bietet es sich auch bei Hochtemperatur-Heizprozessen mit hohen Anforderungen an Reinheit und Inertheit als Substratmaterial für einen Infrarot-Flächenstrahler an. Allerdings zeigt Quarzglas grundsätzlich eine vergleichsweise geringe Wärmeleitfähigkeit und wird sogar häufig als Wärmeisolator eingesetzt. Daher besteht bei dünnen Substrat-Wandstärken die Gefahr einer inhomogenen Wärmeverteilung, die sich im Extremfall auf der gegenüberliegenden Substratseite als Abbildung der Form des elektrischen Widerstandelements zeigt. Dem kann nur durch eine hohe Belegungsdichte mit Leiterbahn begegnet werden, was aber kostspielige ist. Bei dicken Substrat-Wandstärken leiden hingegen die Leistungseffizienz und die Reaktionszeit (das heißt, es sind keine schnellen Temperaturwechsel möglich, die ein rasches Aufheizen und Abkühlen des Substrats voraussetzen).

Eine gewisse Verbesserung in Bezug auf die Reaktionszeit ergibt sich bei einem anderen Infrarot-Flächenstrahler mit einem flächig ausgedehnten Substrat aus Aluminiumnitrid-Keramik wie er beispielsweise aus der EP 1 185 144 A1 bekannt ist. Denn Aluminiumnitrid (AIN) zeigt eine für keramische Werkstoffe sehr hohe Wärmeleitfähigkeit von mindestens 180 $Wm^{-1}K^{-1}$, ist bei hoher Temperatur jedoch Wärmeleitfähigkeit von mindestens 180 $Wm^{-1}K^{-1}$, ist bei hoher Temperatur jedoch empfindlich gegenüber wasserhaltiger Umgebung. Darüber hinaus ist es spröde und nur schwierig an mehrdimensionale Geometrien von Heizoberflächen anpassbar; ein Nachteil, den das Material mit anderen bekannten kristallinen Substrat-Werkstoffen für Heizelemente teilt, wie etwa den keramischen und elektrisch nicht leitenden Werkstoffen Bornitrid oder Aluminiumoxid.

US 2004/019882 A1 beschreibt einen Heizer mit dekorativer Schauseite, die auf einem Panel aus elektrisch isolierendem Werkstoff wie beispielsweise aus Mica (Glimmer) auflaminiert ist. Auf der gegenüberliegenden Flachseite des Panels ist ein Film aus einem Heizleiter aufgebracht, wie etwa aus $SnO_2$ oder aus einem graphithaltigen Werkstoff.

Bei der aus US 6,118,109 A bekannten Heizvorrichtung ist ein Substrat aus einem wärmebeständigen elektrisch isolierenden Werkstoff mit einer Leiterbahn aus einem Heizwiderstandsmaterial belegt. Zum Schutz der Leiterbahn ist auf dieser eine Glasschicht aufgebracht, die aus einem Glasmaterial gebildet ist, in das Aluminiumoxidpulver eingelagert ist.

## Technische Aufgabenstellung

Der Erfindung liegt die Aufgabe zugrunde, einen Infrarotstrahler, insbesondere einen Infrarot-Flächenstrahler, mit hoher Strahlungsleistung pro Flächeneinheit bereitzustellen, der sich an die Geometrie der zu beheizenden Oberfläche einfach anpassen lässt und der auch bei dünnen Substrat-Wandstärken ein homogenes Aufheizen ermöglicht.

## Kurzdarstellung der Erfindung

Diese Aufgabe wird ausgehend von einem Infrarotstrahler der eingangs genannten Gattung erfindungsgemäß dadurch gelöst, dass der Substrat-Werkstoff eine amorphe Matrixkomponente umfasst, in die eine im Spektralbereich der Infrarotstrahlung absorbierende Zusatzkomponente eingelagert ist, wobei das Substrat eine der Leiterbahn zugewandte Fläche aufweist, und wobei mindestens ein Teil dieser Fläche mit einer Deckschicht aus porösem Glas belegt ist, wobei in die Deckschicht die Leiterbahn mindestens teilweise eingebettet ist.

Beim erfindungsgemäßen Infrarotstrahler ist das Substrat das eigentliche, die IR-Strahlung emittierende Element. Der Substrat-Werkstoff enthält folgende Komponenten:

- Die Matrixkomponente stellt hinsichtlich Gewicht und Volumen den größten Anteil des Substrat-Werkstoffs dar. Sie bestimmt maßgeblich die mechanischen und chemischen Eigenschaften des Substrats; beispielsweise die Temperaturbeständigkeit, die Festigkeit und die Korrosionseigenschaften. Dadurch dass die Matrixkomponente amorph ist - sie besteht beispielsweise aus Glas oder aus Kunststoff - kann die geometrische Gestalt des Substrats im Vergleich zu kristallinen Werkstoffen einfacher an die Anforderungen bei der spezifischen Anwendung des Infrarotstrahlers angepasst werden.
- In der Matrixkomponente ist die Zusatzkomponente als eigene Phase gleichmäßig oder gezielt ungleichmäßig verteilt. Die Zusatzkomponente bestimmt maßgeblich die optischen und thermischen Eigenschaften des Substrats; genauer gesagt, sie bewirkt eine Absorption im infraroten Spektralbereich, das ist der Wellenlängenbereich zwischen 780 nm und 1 mm. Die Zusatzkomponente zeigt für mindestens einen Teil der Strahlung in diesem Spektralbereich eine Absorption, die höher ist als die der Matrixkomponente.

Die Phasenbereiche der Zusatzkomponente wirken in der Matrix als optische Störstellen und führen beispielsweise dazu, dass der Kompositwerkstoff - je nach Schichtdicke - bei Raumtemperatur visuell schwarz oder grau-schwärzlich erscheinen kann. Außerdem wirken die Störstellen selbst wärmeabsorbierend.

Laut Kirchhoff'schem Strahlungsgesetz entsprechen spektraler Absorptionsgrad $\alpha_\lambda$ und spektraler Emissionsgrad $\varepsilon_\lambda$ eines realen Körpers im thermischen Gleichgewicht einander.

$$\alpha_\lambda = \varepsilon_\lambda \quad (1)$$

Die Zusatzkomponente führt somit dazu, dass der Substrat-Werkstoff Infrarotstrahlung emittiert. Der spektrale Emissionsgrad $\varepsilon_\lambda$ lässt sich bei bekannten gerichtet-hemisphärischen spektralen Reflexionsgrad $R_{gh}$ und Transmissionsgrad $T_{gh}$ wie folgt berechnen:

$$\varepsilon_\lambda = 1 - R_{gh} - T_{gh} \quad (2)$$

Unter dem "spektralen Emissionsgrad" wird hierbei der "spektrale normale Emissionsgrad" verstanden. Dieser wird anhand eines Messprinzips ermittelt, das unter der Bezeichnung "Black-Body Boundary Conditions" (BBC) bekannt ist und veröffentlicht ist in "DETERMINING THE TRANSMITTANCE AND EMITTANCE OF TRANSPARENT AND SEMITRANSPARENT MATERIALS AT ELEVATED TEMPERATURES"; J. Manara, M. Keller, D. Kraus, M. Arduini-Schuster; 5th European Thermal-Sciences Conference, The Netherlands (2008).

Der Substrat-Werkstoff mit der Zusatzkomponente hat eine höhere Wärmestrahlungsabsorption als dies ohne die Zusatzkomponente der Fall wäre. Dadurch ergibt sich eine verbesserte Wärmeleitung von der Strombahn in das Substrat, eine schnellere Verteilung der Wärme und eine höhere Abstrahlungsrate auf das Heizgut. Dadurch gelingt es, eine höhere Strahlungsleistung pro Flächeneinheit bereitzustellen und auch bei dünnen Substrat-Wandstärken und/oder bei einer vergleichsweise geringen Leiterbahn-Belegungsdichte eine homogene Abstrahlung und ein gleichförmiges Temperaturfeld zu erzeugen. Dünne Substrate verfügen über eine geringe thermische Masse und ermöglichen schnelle Temperaturwechsel. Eine Kühlung ist dafür nicht erforderlich.

Da das Substrat aus amorphem Werkstoff besteht, kann es leicht in die für den Anwendungsfall geeignete Form gebracht werden. Es ist beispielsweise als Platte, Ring, Vollzylinder oder Hohlzylinder ausgelegt, kann aber auch Teil von Ofenwandungen oder Reaktoren bilden.

Die Zusatzkomponente ist in die Matrixkomponente eingelagert. Sie bildet eine eigene, in der amorphen Matrixkomponente dispergierte amorphe oder kristalline Phase.

Im Substrat-Werkstoff liegt die Zusatzkomponente bevorzugt in einer Art und Menge vor, die im Substrat-Werkstoff bei einer Temperatur von 600 °C einen spektralen Emissionsgrad $\varepsilon$ von mindestens 0,6 für Wellenlängen zwischen 2 und 8 $\mu$m bewirkt.

Das Substrat weist eine der Leiterbahn zugewandte Fläche auf, wobei mindestens ein Teil dieser Fläche mit einer Deckschicht aus porösem Quarzglas belegt ist, wobei in die Deckschicht die Leiterbahn mindestens teilweise eingebettet ist.

Die Deckschicht aus opakem Quarzglas dient dabei als diffuser Reflektor und sie schützt und stabilisiert gleichzeitig die Leiterbahn. Die Wirkung und die Herstellung einer derartigen Deckschicht aus opakem Quarzglas sind bekannt und beispielsweise in der WO 2006/021416 A1 beschrieben. Sie wird aus einer Dispersion erzeugt, die amorphe SiO$_2$-Teilchen in einer Flüssigkeit enthält. Diese wird auf die der Leiterbahn zugewandte Substrat-Fläche aufgetragen, zu einer Grünschicht getrocknet und diese bei hoher Temperatur gesintert. Das Sintern der Grünschicht und das Einbrennen der Leiterbahn erfolgt bevorzugt in ein und demselben Heizprozess.

Bei einer besonders bevorzugten Ausführungsform des erfindungsgemäßen Infrarotstrahlers liegt die Zusatzkomponente in einer Art und Menge vor, die im Substrat-Werkstoff bei einer Temperatur von 1000 °C einen spektralen Emissionsgrad $\varepsilon$ von mindestens 0,75 für Wellenlängen zwischen 2 und 8 $\mu$m bewirkt.

Der Substrat-Werkstoff verfügt demnach über ein hohes Absorptions- und Emissionsvermögen für Wärmestrahlung zwischen 2 $\mu$m und 8 $\mu$m, also im Wellenlängenbereich der infraroten Strahlung. Dies vermindert die Reflexion an den Substrat-Oberflächen, so dass sich unter der Annahme einer vernachlässigbar geringen Transmission ein Reflexionsgrad für Wellenlängen zwischen 2 und 8 $\mu$m und bei Temperaturen oberhalb von 1000 °C bei maximal 0,25 und bei Temperaturen von 600 °C von maximal 0,4 ergibt. Nicht reproduzierbare Aufheizungen durch reflektierte Wärmestrahlung werden so vermieden, was zu einer gleichmäßigen oder gewünscht ungleichmäßigen Temperaturverteilung beiträgt.

Die Matrix kann aus undotiertem oder dotiertem Quarzglas bestehen und gegebenenfalls außer SiO$_2$ in einer Menge bis maximal 10 Gew.-% andere oxidische, nitridische oder carbidische Komponenten enthalten. Zur Vermeidung einer vom Substrat-Werkstoff ausgehenden Kontaminationsgefahr hat es sich aber eine Ausführungsform des Infrarotstrahlers besonders bewährt, bei dem die amorphe Matrixkomponente Quarzglas ist und vorzugsweise eine chemische Reinheit von mindestens 99,99% SiO$_2$ und einen Cristobalitgehalt von höchstens 1% besitzt.

Quarzglas besitzt die weiter oben bereits genannten Vorteile einer gute Korrosions-, Temperatur- und Temperaturwechselbeständigkeit und es steht in hoher Reinheit zur Verfügung. Daher bietet es sich auch bei Hochtemperatur-Heizprozessen mit Temperaturen bis zu 1100 °C als Substratmaterial an. Eine Kühlung ist nicht erforderlich.

Durch einen niedrigen Cristobalitgehalt der Matrix von 1% oder weniger werden eine geringe Entglasungsneigung und damit eine geringe Rissbildungsgefahr beim Einsatz gewährleistet. Damit wird auch hohen Anforderungen an Partikelfreiheit, Reinheit und Inertheit genügt, wie sie häufig bei Halbleiterfertigungsprozessen bestehen.

Die Wärmeabsorption des Substrat-Werkstoffs hängt vom Anteil der Zusatzkomponente ab. Der Gewichtsanteil der Zusatzkomponente sollte daher vorzugsweise mindestens 0,1% betragen. Andererseits kann ein hoher Volumenanteil der Zusatzkomponente die chemischen und mechanischen Eigenschaften der Matrix beeinträchtigen. Im Hinblick darauf liegt der Gewichtsanteil der Gewichtsanteil der Zusatzkomponente bevorzugt im Bereich zwischen 0,1 und 5 %.

Ein besonders hoher Emissionsgrad ist erzielbar, wenn die Zusatzkomponente als Zusatzkomponenten-Phase vorliegt und eine nicht-sphärische Morphologie mit maximalen Abmessungen von im Mittel weniger als 20 $\mu$m, vorzugsweise jedoch mehr als 3 $\mu$m aufweist.

Die nicht-sphärische Morphologie der Zusatzkomponenten-Phase trägt dabei auch zu einer hohen mechanischen Festigkeit und zu einer geringen Rissbildungsneigung des Substrat-Werkstoffs bei. Die Angabe "maximale Abmessung" bezieht sich auf die in Schliff erkennbare längste Ausdehnung eines isolierten Bereichs mit Zusatzkomponenten-Phase. Der Medianwert aller längsten Ausdehnungen in einem Schliffbild bildet den oben genannten Mittelwert.

Bei einer bevorzugten Ausführungsform des Infrarotstrahlers enthält die Zusatzkomponente ein Halbleitermaterial in elementarer Form, vorzugsweise elementares Silizium.

Die feinteiligen Bereiche der Halbleiter-Phase wirken in der Matrix einerseits als optische Störstellen und führen dazu, dass der Substrat-Werkstoff - je nach Schichtdicke - bei Raumtemperatur visuell schwarz oder grau-schwärzlich erscheint. Andererseits haben die Störstellen auch Auswirkungen auf die Wärmeabsorption des Substrat-Werkstoffs insgesamt. Dies ist im Wesentlichen auf die Eigenschaften der fei verteilten Phasen aus dem elementar vorliegenden Halbleiter zurückzuführen, wonach zum einen die Energie zwischen Valenzband und Leitungsband (Bandlückenenergie) mit der Temperatur abnimmt und zum anderen bei ausreichend hoher Aktivierungsenergie Elektronen vom Valenzband in das Leitungsband gehoben werden, was mit einem deutlichen Anstieg des Absorptionskoeffizienten einhergeht. Die thermisch aktivierte Besetzung des Leitungsbandes führt dazu, dass das Halbleitermaterial bei Raumtemperatur für bestimmte Wellenlängen (wie etwa ab 1000 nm) in gewissem Umfang transparent sein kann und bei hohen Temperaturen undurchsichtig wird. Mit steigender Temperatur des Substrat-Werkstoffs können daher Absorption und Emissionsgrad sprungartig zunehmen. Dieser Effekt hängt unter anderem von Struktur (amorph/kristallin) und Dotierung des Halbleiters ab. Reines Silizium zeigt beispielsweise ab etwa 600 °C eine merkliche Emissionszunahme, die etwa ab etwa 1000 °C eine Sättigung erreicht.

Das Halbleitermaterial und insbesondere das vorzugsweise eingesetzte, elementare Silizium bewirken daher eine Schwarzfärbung des glasigen Matrix-Werkstoffs und zwar bei Raumtemperatur, aber auch bei erhöhter Temperatur oberhalb von beispielsweise 600 °C. Dadurch wird eine gute Abstrahlungscharakteristik im Sinne einer breitbandigen, hohen Emission bei hohen Temperaturen erreicht. Das Halbleitermaterial, bevorzugt das elementare Silizium, bildet dabei eine in der Matrix dispergierte, eigene Si-Phase. Diese kann mehrere Halbmetalle oder Metalle enthalten (Metalle jedoch maximal bis zu 50 Gew.-%, besser nicht mehr als 20 Gew.-%; bezogen auf den Gewichtsanteil der Zusatzkomponente). Dabei zeigt der Substrat-Werkstoff keine offene Porosität, sondern allenfalls eine geschlossene Porosität von weniger als 0,5 % und eine spezifische Dichte von mindestens 2,19 g/cm$^3$. Er ist daher für Infrarotstrahler geeignet, bei denen es auf Reinheit oder Gasdichtheit des Substratwerkstoffs ankommt.

Bauteile aus einem Kompositwerkstoff mit einer Matrix aus Quarzglas und darin eingelagerter Siliziumphase sind bekannt. Gemäß der WO 2015067688 A1 werden daraus beispielsweise Reaktoren, Armaturen oder Waferhalter zum Einsatz in einem Oxidations- oder Temperprozess, der Epitaxie oder der chemischen Gasphasenabscheidung gefertigt. Für den Einsatz als Infrarotstrahlung emittierender Werkstoff für einen Infrarotstrahler gemäß vorliegender Erfindung wird das Substrat mit einer Leiterbahn belegt, die bevorzugt als eingebrannte Dickfilmschicht ausgeführt ist.

Derartige Dickfilmschichten werden beispielsweise aus Widerstandspaste mittels Siebdruck oder aus metallhaltiger Tinte mittels Tintenstrahldruck erzeugt und anschließend bei hoher Temperatur eingebrannt.

Im Hinblick auf eine möglichst homogene Temperaturverteilung hat es sich als vorteilhaft erwiesen, wenn die Leiterbahn als Linienmuster ausgeführt ist, das eine Fläche des Substrats so bedeckt, dass zwischen benachbarten Leiterbahn-Abschnitten ein Zwischenraum von mindestens 1 mm, bevorzugt mindestens 2 mm verbleibt.

Das hohe Absorptionsvermögen des Substratwerkstoffs ermöglicht auch bei vergleichsweise geringer Leiterbahn-Belegungsdichte der Heizfläche eine homogene Abstrahlung. Eine geringe Belegungsdichte ist dadurch gekennzeichnet ist, dass der minimale Abstand zwischen benachbarten Leiterbahn-Abschnitten 1 mm oder mehr, bevorzugt 2 mm oder mehr beträgt. Ein großer Abstand zwischen den Leiterbahnabschnitten vermeidet Überschläge, die insbesondere beim Betrieb mit hohen Spannungen unter Vakuum auftreten können. Der erfindungsgemäße Infrarotstrahler ist daher für den Vakuumbetrieb besonders geeignet. Die Leiterbahn verläuft beispielsweise in einem spiral- oder mäanderförmigen Linienmuster.

Bei einer weiteren bevorzugten Ausführungsform des Infrarotstrahlers ist die Leiterbahn anstelle oder ergänzend zu der Deckschicht aus opakem Quarzglas in von einer elektrisch isolierenden, gasdichten Schicht, wie beispielsweise einer Glasur-Schicht, bedeckt. Diese schirmt die Leiterbahn elektrisch nach außen ab und sie dient zum Schutz der Leiterbahn vor mechanischer und korrosiver Beanspruchung.

Der erfindungsgemäße Infrarotstrahler zeichnet sich insbesondere auch durch hohe räumliche Homogenität der emittierten Strahlung aus. So werden bereits in kurzen Abständen zur ebenen Abstrahlfläche annähernd gleich große Bestrahlungsstärken gemessen. Demnach ist er bei einer bevorzugten Ausführungsform als Infrarot-Flächenstrahler ausgebildet, wobei das Substrat eine der Leiterbahn abgewandte ebene Abstrahlfläche auf, die Infrarotstrahlung emittiert, wobei die Infrarotstrahlung in einem Abstand von 10 mm von der Abstrahlfläche eine Bestrahlungsstärke erzeugt, die - gemessen an zehn Messstellen mit einem Abstand von 5 mm voneinander anhand der IEC-Norm 62798 (2014) - an keiner Messstelle um mehr als +/- 5% von einem Maximalwert der Bestrahlungsstärke abweicht.

Die Messung der Bestrahlungsstärke erfolgt anhand der Methode aus der internationalen Vorschrift IEC 62798 (2014).

Ausführungsbeispiel

Nachfolgend wird die Erfindung anhand eines Ausführungsbeispiels und einer Patentzeichnung näher erläutert. In der Zeichnung zeigt im Einzelnen:

Figur 1    eine Ausführungsform des erfindungsgemäßen Infrarotstrahlers mit einer Reflektorschicht in schematischer Darstellung und in einer Seitenansicht,

Figur 2    eine mehrschichtige Ausführungsform des Infrarotstrahlers mit einer Reflektorschicht als Zwischenschicht in schematischer Darstellung,

Figur 3    eine weitere Ausführungsform eines mehrschichtigen Infrarotstrahlers gemäß der Erfindung in einer Seitenansicht,

Figur 4    den kachelförmigen Infrarotstrahler gemäß Figur 1 in einer Draufsicht auf die mit mäanderförmiger Leiterbahn belegte Oberseite in schematischer Darstellung,

Figur 5    eine optische Aufnahme des visuell wahrnehmbaren Leuchtens des Infrarotstrahlers in einer Draufsicht auf die Unterseite der Kachel,

Figur 6    eine Ausführungsform des erfindungsgemäßen kachelförmigen Infrarotstrahlers mit einer in eine elektrisch isolierende und gasdichte Glasurschicht eingebetteten Leiterbahn,

Figur 7    anhand zweier Diagramme (a) und (b) einen Vergleich von Homogenität und Intensität der Bestrahlung durch einen erfindungsgemäßen Infrarot-Flächenstrahler und einem Infrarot-Flächenstrahler nach dem Stand der Technik,

Figur 8    ein Diagramm zur Verdeutlichung des Bestrahlungsprofils der auf eine Messprobe auftreffenden Infrarotstrahlung beim erfindungsgemäßen Infrarot-Flächenstrahler,

Figur 9    ein Diagramm zur Verdeutlichung des Bestrahlungsprofils der auf eine Messprobe auftreffenden Infrarotstrahlung bei einem aus einzelnen Carbonstrahler-Lampenohren aufgebauten Infrarot-Flächenstrahler gemäß dem Stand der Technik, und

Figur 10    ein Diagramm zur Verdeutlichung des Bestrahlungsprofils der auf eine Messprobe auftreffenden Infrarotstrahlung bei einem aus Zwillingsrohrstrahlen aufgebauten Infrarot-Flächenstrahler gemäß dem Stand der Technik, und,

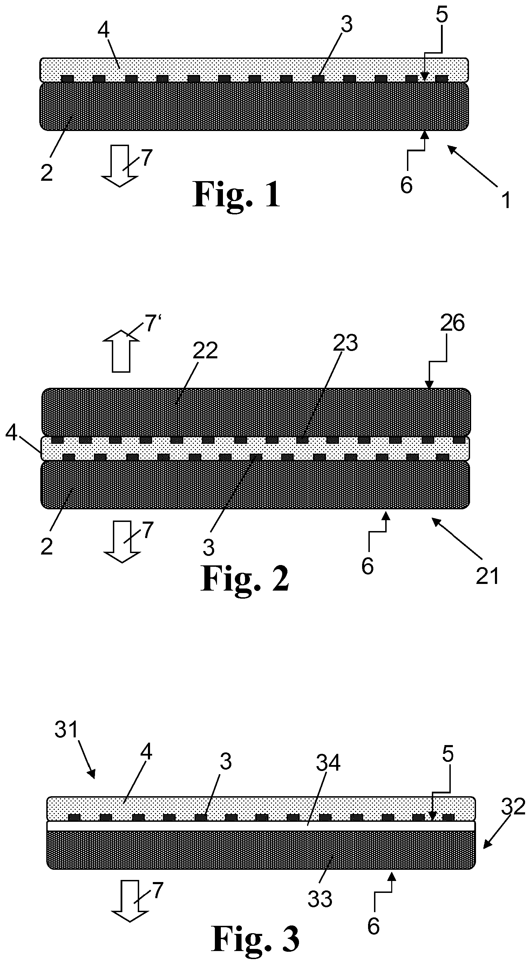

**Figur 1** zeigt schematisch eine erste Ausführungsform eines mehrschichtigen Infrarot-Flächenstrahlers 1 gemäß der Erfindung. Dieser weist ein plattenförmiges Substrat 2, eine Leiterbahn 3 und eine Reflektorschicht 4 auf.

Das plattenförmige Substrat 2 hat Rechteckform mit einer Plattenstärke von 2,5 mm. Es besteht aus einem Kompositwerkstoff mit einer Matrix aus Quarzglas. Die Matrix wirkt visuell transluzent bis transparent. Sie zeigt bei mikroskopischer Betrachtung keine offenen Poren und allenfalls geschlossene Poren mit maximalen Abmessungen von im Mittel weniger als 10 $\mu$m. In der Matrix ist eine Phase aus elementarem Silizium in Form nicht-sphärischer Bereiche homogen verteilt. Deren Gewichtsanteil beträgt 5%. Die maximalen Abmessungen der Si-Phasenbereiche liegen im Mittel (Medianwert) im Bereich von etwa 1 bis 10 $\mu$m. Der Kompositwerkstoff ist gasdicht, er hat eine Dichte von 2,19 g/cm$^3$ und er ist an Luft bis zu einer Temperatur von etwa 1200 °C stabil.

Die eingelagerte Si-Phase trägt einerseits zur Opazität des Kompositwerkstoffs insgesamt bei und sie hat Auswirkungen auf die optischen und thermischen Eigenschaften des Kompositwerkstoffs. Dieser zeigt bei hoher Temperatur eine hohe Absorption von Wärmestrahlung und einen hohen Emissionsgrad.

Bei Raumtemperatur wird der Emissionsgrad des Kompositwerkstoffs für das Substrat 2 unter Einsatz einer Ulbrichtkugel gemessen. Diese erlaubt die Messung des gerichtet hemisphärischen spektralen Reflexionsgrades $R_{gh}$ und des gerichtethemisphärischen spektralen Transmissionsgrades $T_{gh}$, woraus der normale spektrale Emissionsgrad berechnet wird. Die Messung des Emissionsgrades bei erhöhter Temperatur erfolgt im Wellenlängenbereich von 2 bis 18 $\mu$m mittels eines FTIR-Spektrometers (Bruker IFS 66v Fourier-Transformations Infrarot (FTIR)), an das über eine Zusatzoptik eine BBC-Probenkammer angekoppelt wird, anhand des oben genannten BBC-Messprinzips. Die Probenkammer verfügt dabei in den Halbräumen vor und hinter der Probenhalterung über temperierbare Schwarzkörperumgebungen und eine Strahlausgangsöffnung mit Detektor. Die Probe wird in einem separaten Ofen auf eine vorgegebene Temperatur aufgeheizt und zur Messung in den Strahlengang der Probenkammer mit den auf vorgegebene Temperatur eingestellten Schwarzkörperumgebungen verbracht. Die vom Detektor erfasste Intensität setzt sich aus einem Emissions-, einem Reflexions- und einem Transmissionsanteil zusammen, nämlich aus Intensität, die von der Probe selbst emittiert wird, Intensität, die vom vorderen Halbraum auf die Probe fällt und von dieser reflektiert wird, sowie Intensität, die vom hinteren Halbraum auf die Probe fällt und von dieser transmittiert wird. Zur Ermittlung der einzelnen Größen Emissions-, Reflexions- und Transmissionsgrad müssen drei Messungen durchgeführt werden.

Der am Kompositwerkstoff gemessene Emissionsgrad im Wellenlängenbereich von 2 bis etwa 4 μm hängt von der Temperatur ab. Je höher die Temperatur ist, umso höher ist die Emission. Bei 600 °C liegt der normale Emissionsgrad im Wellenlängenbereich von 2 bis 4 μm oberhalb von 0,6. Bei 1000 °C liegt der normale Emissionsgrad im gesamten Wellenlängenbereich zwischen 2 und 8 μm oberhalb von 0,75.

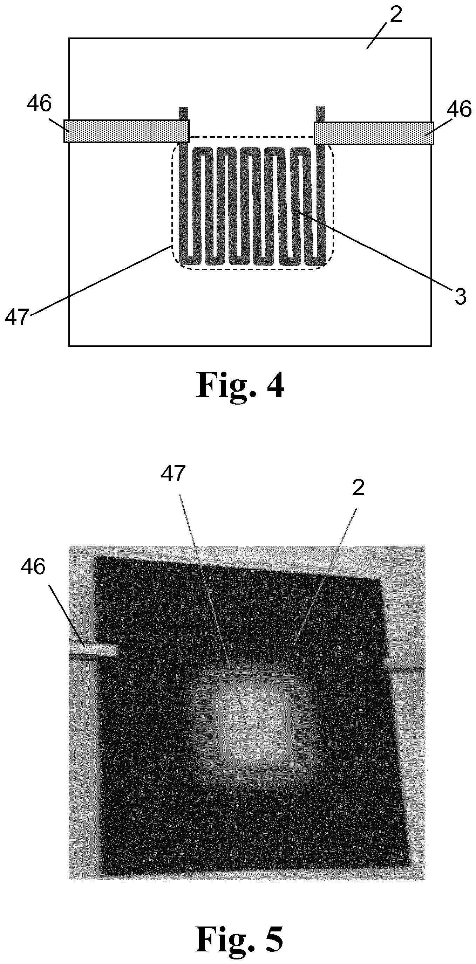

Die Leiterbahn 3 wird aus einer Platin-Widerstandspaste auf der Oberseite 5 des Substrats 2 erzeugt. An beiden Enden sind Leitungen oder Klemmen 46 (siehe Figur 4) zum Einspeisen elektrischer Energie angeschweißt. Die Leiterbahn 3 zeigt einen mäanderförmigen Verlauf (siehe Figur 4), der eine Heizfläche des Substrats 2 so dicht bedeckt, dass zwischen benachbarten Leiterbahnabschnitten ein gleichmäßiger Abstand von 2 mm verbleibt. Im gezeigten Querschnitt hat die Leiterbahn 3 Rechteckprofil mit einer Breite von 1 mm und einer Dicke von 20 μm. Infolge der geringen Dicke ist der Materialanteil des teuren Leiterbahn-Werkstoffs am Infrarotstrahler im Vergleich zu dessen Effizienz gering. Die Leiterbahn 3 hat direkten Kontakt mit der Oberseite 5 des Substrats 2, so dass eine größtmögliche Wärmeübertragung in das Substrat 2 erreicht wird. Die gegenüberliegende Unterseite 6 dient beim Einsatz des Infrarotstrahlers als Abstrahlfläche für Wärmestrahlung. Die Abstrahlrichtung wird vom Richtungspfeil 7 angezeigt.

Die Reflektorschicht 4 besteht aus opakem Quarzglas und hat eine mittlere Schichtdicke um 1,7 mm. Sie zeichnet sich durch Rissfreiheit und eine hohe Dichte von etwa 2,15 g/cm³ aus und sie ist bis Temperaturen oberhalb von 1100 °C thermisch beständig. Die Reflektorschicht 4 bedeckt den gesamten Heizbereich des Substrats 2 und sie bedeckt die Leiterbahn 3 vollständig und schirmt sie somit vor chemischen oder mechanischen Einflüssen aus der Umgebung ab.

Sofern bei den in anderen Figuren gezeigten Ausführungsformen dieselben Bezugsziffern wie in Figur 1 verwendet sind, so sind damit baugleiche oder äquivalente Bauteile und Bestandteile bezeichnet, wie sie oben anhand der Beschreibung der ersten Ausführungsform des erfindungsgemäßen Infrarotstrahlers näher erläutert sind.

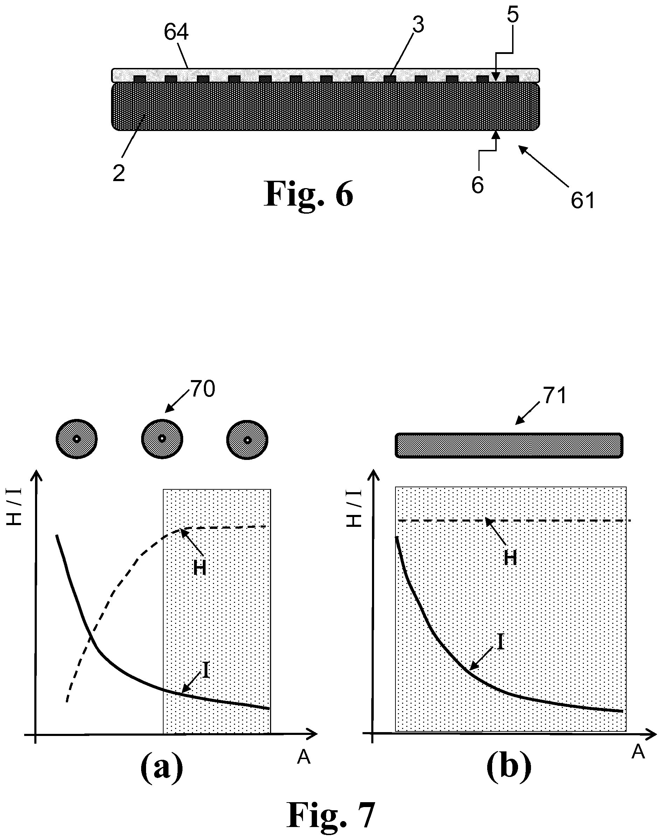

Bei der in **Figur 6** gezeigten Ausführungsform des kachelförmigen Infrarotstrahlers 61 verläuft auf der der Abstrahlfläche (der Unterseite 6) gegenüberliegenden Oberseite 5 des Substrats 2 eine Leiterbahn 3. Diese ist mittels einer elektrisch isolierenden Schicht in 64 in Form einer Glasur abgedeckt. Die isolierende Schicht 64 schirmt die Leiterbahn 2 elektrisch nach außen ab und sie dient zum Schutz der Leiterbahn 2 vor mechanischer und korrosiver Beanspruchung. Die besteht aus einem glasartigen Werkstoff, der sich beim Erhitzen als erweichte, viskose Glasphase auf der Oberseite 5 gleichmäßig verteilt und eine gasdichte Abschirmung bewirkt. Infolge des Erweichungsverhaltens der Glasphase mit vergleichsweise niedriger Erweichungstemperatur und dementsprechender plastischer Verformbarkeit in einem weiten Temperaturbereich wird die Ausbildung von Druckspannungen zwischen Substrat 2 und isolierender Schicht 64 infolge ihrer unterschiedlichen thermischen Ausdehnungskoeffizienten weitgehend vermieden.

Zur Herstellung der isolierenden Schicht in 64 wird eine Siebdruckpaste auf der der Substrat-Oberseite 5 so aufgetragen, dass die Leiterbahn 3 darin vollständig eingebettet ist. Die Siebdruckpaste besteht aus einem hochreinen SiO₂-Pulver (20 bis 80 Gew.-%), einem Lösungsmittel (20 bis 50 Gew.-%) und einem Binder (1 bis 15 Gew.-%), wobei die Angaben in Klammern für die jeweilige Komponente bevorzugte Gewichtsanteile an der Gesamtmasse der Paste angeben. Als Lösungsmittel wird beispielsweise Hexanol, als Weichmacher beispielsweise Phthalat und als Binder wird beispielsweise Polyvinylalkohol verwendet..

Aus einer 1:1-Mischung (Gewichtsanteile) aus der Pulver-Rohstoff-Mischung und destilliertem Wasser mit einem Zusatz an Binder wird eine Siebdruckpaste erzeugt. Diese wird in einer Dicke von 100 μm auf die Oberseite des Substrats 2 aufgedruckt, so dass die Leiterbahn 2 darin vollständig eingebettet ist und zu einer gasdichten und isolierenden Schicht 64 gesintert. Das Sintern von Leiterbahn 2 und isolierender Schicht 64 kann auch in ein und demselben Arbeitsgang erfolgen.

Bei der Ausführungsform des Infrarot-Flächenstrahlers von **Figur 2** sind zwei im Wesentlichen baugleiche plattenförmige Substratkörper 2, 22 vorgesehen, zwischen denen die Reflektorschicht 4 und die darin eingebetteten Leiterbahnen 3; 23 sandwichartig eingeschlossen ist. Diese Ausführungsform des Infrarot-Flächenstrahlers ist für eine beidseitige Wärmeabstrahlung ausgelegt; sie verfügt über zwei Abstrahlflächen (6; 26). Die Abstrahlrichtungen zeigen die Richtungspfeile 7, 7' an.

Bei der Ausführungsform des Infrarotstrahlers 31 von **Figur 3** wird ein mehrschichtiges Substrat 32 eingesetzt. Dieses besteht aus einem Basiskörper 33 aus dem Kompositwerkstoff wie anhand Figur 1 erläutert und einer dünnen Deckschicht 34 aus undotiertem Quarzglas, das eine Fläche des Basiskörpers 33 vollständig bedeckt. Die Deckschicht 24 aus Quarzglas hat eine Dicke von 0,5 mm und bildet die Substrat-Oberseite 35, auf der Leiterbahn 3 aufgebracht ist. Diese Ausführungsform hat gegenüber der Ausführungsform von Figur 1 den Vorteil, dass die Leiterbahn 3 auf der im Vergleich zum Kompositwerkstoff glatteren Deckschicht-Oberfläche aufgebracht werden kann.

In einer anderen, nicht als Figur gezeigten Ausführungsform des erfindungsgemäßen Infrarotstrahlers ist ein mehrschichtiges Substrat vorgesehen, das aus einem Basiskörper aus dem Kompositwerkstoff wie anhand Figur 1 erläutert besteht, bei dem die Abstrahlseite mit einer dünnen Deckschicht aus undotiertem Quarzglas vollständig belegt ist. Diese Ausführungsform hat gegenüber der Ausführungsform von Figur 1 den Vorteil, dass der Kompositwerkstoff vollkommen von der Umgebung um das zu bestrahlende Gut abgeschirmt ist, so dass ein Austrag von Verunreinigungen aus dem Kompositwerkstoff in das Heizgut als auch korrosive Angriffe aus der Umgebung auf den Kompositwerkstoff vermieden werden.

**Figur 4** zeigt die Draufsicht auf die Oberseite 5 des kachelförmigen Substrats 2 aus Silizium-haltigem Quarzglas. Daraus sind der mäanderförmige Verlauf der Leiterbahn 3 auf der Substrat-Oberseite sowie die Stromanschlussklemmen 36 zu erkennen. Die Leiterbahnabschnitte lassen zwischen sich einen vergleichsweise großen Abstand von 2 mm. Im Ausführungsbeispiel erfolgt die elektrische Kontaktierung über die Klemmen 46 an zwei gegenüberliegenden Seiten. Es ist aber selbstverständlich auch eine einseitige Kontaktierung möglich.

Die Belegungsfläche mit Leiterbahn 3 definiert die Heizfläche 47 des Substrats 2. Innerhalb der Heizfläche 47 stellt sich auf der Substrat-Unterseite weitgehend gleichmäßig eine maximale Temperatur von etwa 1000 °C ein, wie das visuell erkennbare Leuchten des Quarzglas-Substrats 2 von **Figur 5** als homogene helle Fläche zeigt.

Im Folgenden wird ein Verfahren zur Herstellung des Infrarot-Flächenstrahlers 1 an einem Beispiel näher erläutert.

### Herstellung des Substrats 2

Die Herstellung erfolgt anhand des Schlickergießverfahrens, wie es in der WO 2015067688 A1 beschrieben ist. Amorphe Quarzglaskörnung wird vorab in einem Heißchlorierverfahren gereinigt, wobei darauf geachtet wird, dass der Cristobalitgehalt unter 1 Gew.-% liegt. Quarzglaskörnung mit Korngrößen im Bereich zwischen 250 μm und 650 μm wird mit deionisiertem Wasser nassgemahlen, so dass sich ein homogener Grundschlicker mit einem Feststoffgehalt von 78 % bildet.

Anschließend werden aus dem Grundschlicker die Mahlkugeln entfernt und es wird ein Zuschlag in Form von Silizium-Pulver in einer Menge zugemischt, bis ein Feststoffgehalt von 83 Gew.-% erreicht ist. Das Silizium-Pulver enthält hauptsächlich nicht-sphärische Pulverteilchen mit enger Teilchengrößenverteilung, deren $D_{97}$-Wert bei etwa 10 μm liegt und dessen Feinanteil mit Teilchengrößen von weniger als 2 μm vorab entfernt worden ist.

Der mit dem Silizium-Pulver gefüllte Schlicker wird weitere 12 Stunden homogenisiert. Der Gewichtsanteil des Silizium-Pulvers am gesamten Feststoffgehalt liegt bei 5 %. Die $SiO_2$-Teilchen im fertig homogenisierten Schlicker zeigen eine Teilchengrößenverteilung, die durch einen $D_{50}$- Wert von etwa 8 μm und durch einen $D_{90}$-Wert von etwa 40 μm gekennzeichnet ist.

Der Schlicker wird in eine Druckgussform einer kommerziellen Druckgussmaschine gegossen und über eine poröse Kunststoffmembran unter Bildung eines porösen Grünkörpers entwässert. Der Grünkörper hat die Form einer Rechteckplatte. Zum Entfernen von gebundenem Wasser wird der Grünkörper bei etwa 90 °C fünf Tage lang in einem belüfteten Ofen getrocknet. Nach dem Abkühlen wird der erhaltene poröse Rohling mechanisch nahezu auf das Endmaß der herzustellenden Quarzglas-Platte mit der Plattenstärke von 2,5 mm bearbeitet. Zum Sintern des Rohlings wird dieser in einem Sinterofen unter Luft innerhalb von einer Stunde auf eine Heiztemperatur von 1390 °C aufgeheizt und bei dieser Temperatur 5h gehalten.

Die so erhaltene Quarzglasplatte (2) besteht aus einem gasdichten Kompositwerkstoff mit einer Dichte von 2,1958 g/cm³, bei dem in einer Matrix aus opakem Quarzglas voneinander getrennte, nicht-sphärische Bereiche aus elementarer Si-Phase homogen verteilt sind, deren Größe und Morphologie weitgehend denen des eingesetzten Si-Pulvers entsprechen. Die maximalen Abmessungen liegen im Mittel (Medianwert) im Bereich von etwa 1 bis 10 μm. Die Matrix wirkt visuell transluzent bis transparent. Sie zeigt bei mikroskopischer Betrachtung keine offenen Poren und allenfalls geschlossene Poren mit maximalen Abmessungen von im Mittel weniger als 10 μm; die auf Basis der Dichte berechnete Porosität liegt bei 0,37%. Der Kompositwerkstoff ist an Luft bis zu einer Temperatur von etwa 1200 °C stabil.

### Aufbringen von Leiterbahn 3 und Reflektorschicht 4

Die Quarzglasplatte (2) wird oberflächlich geschliffen, so dass eine mittlere Oberflächenrauigkeit Ra von etwa 1 μm eingestellt wird. Auf ihrer geschliffenen Oberseite 5 wird anhand eines Siebdruckverfahrens die mäanderförmige Leiterbahn 3 aufgebracht. Dafür wird eine handelsübliche Platin-haltige Widerstandspaste eingesetzt.

Nach dem Trocknen der Leiterbahn 3 wird auf der Oberseite 5 der Quarzglasplatte (2) eine Schlickerschicht aufgebracht. Dieser Schlicker wird durch Modifikation des $SiO_2$-Grundschlickers erhalten, wie er oben bereits beschrieben ist (ohne einen Zuschlag von Silizium-Pulver), indem dem homogenen, stabilen Grundschlicker amorphe $SiO_2$-Körnung in Form sphärischer Teilchen mit einer Korngröße um 5 μm zugemischt werden bis ein Feststoffgehalt von 84 Gew.-% erreicht ist. Diese Mischung wird 12 Stunden lang in einer Trommelmühle bei einer Drehzahl von 25 U/min homogenisiert. Der so erhaltene Schlicker hat einen Feststoffgehalt von 84% und eine Dichte von etwa 2,0 g/cm³. Die nach dem Vermahlen der Quarzglaskörnung erhaltenen $SiO_2$-Teilchen im Schlicker zeigen eine Teilchengrößenverteilung, die durch einen $D_{50}$-Wert von etwa 8 μm und durch einen $D_{90}$-Wert von etwa 40 μm gekennzeichnet ist.

In diesen Schlicker wird einige Sekunden lang die vorab in Alkohol gereinigte Quarzglasplatte (2) eingetaucht. Auf der Quarzglasplatte (2) bildet sich dadurch eine gleichmäßige Schlickerschicht mit einer Dicke von etwa 2 mm. Nach dem Abwischen von der Unterseite 6 wird die Schlickerschicht zunächst ca. 5 Stunden bei Raumtemperatur und anschließend mittels eines IR-Strahlers an Luft getrocknet. Die getrocknete Schlickerschicht ist rissfrei, und sie hat eine mittlere Dicke von etwas weniger als 2 mm.

Die getrocknete Leiterbahn und die getrocknete Schlickerschicht werden anschließend unter Luft in einem Sinterofen eingebrannt beziehungsweise gesintert. Das Heizprofil umfasst eine Heiztemperatur von 1200 °C. Die Haltezeit beträgt im Ausführungsbeispiel zwei Stunden. Danach ist die Leiterbahn eingebrannt und die Schlicker-Schicht opak, jedoch visuell dicht und weitgehend blasenfrei.

Der erfindungsgemäße Infrarotstrahler zeichnet sich durch einen hohen Emissionsgrad für Wärmestrahlung, effektive Nutzung der eingespeisten Leistung und Flexibilität in der geometrischen Gestaltung aus. Er kann als planarer Infrarotstrahler beispielsweise in der Druckindustrie eingesetzt werden, um hohe Prozessgeschwindigkeiten (>100m/s) bei sehr hoher Leistungsdichte (>200 kW/m$^2$) und kleinen Abständen zum Substrat (<5mm) zu realisieren. Eine andere Anwendung liegt im Bereich des 3D-Drucks, bei dem verdruckte metallische Pulver infolge der hohen Flächenleistung und der Strahlertemperatur von etwa 1000°C verdichtet werden.

Die Diagramme (a) und (b) von **Figur 7** veranschaulichen schematisch den Zusammenhang zwischen Bestrahlungs-Homogenität beziehungsweise - Intensität und dem Abstand zwischen Strahler und Heizgut sowie diesbezügliche Unterschiede zwischen einem aus mehreren Einzelstrahlern zusammengesetzten Infrarot-Flächenstrahler (Diagramm (a)) und dem kachelförmigen Infrarot-Flächenstrahler gemäß der Erfindung (Diagramm (b)). Auf der Ordinate der Diagramme (a) und (b) ist dabei in relativen Einheiten jeweils die Homogenität "H" beziehungsweise die auf dem Heizgut auftreffende Strahlungs-Intensität "I" gegen den Abstand "A" (ebenfalls in relativer Einheit) zwischen Strahler und Heizgut aufgetragen. Der Flächenstrahler 70 in Diagramm (a) wird von mehreren, nebeneinander angeordneten Carbon-Heizstrahlern repräsentiert, deren Hüllrohre durch drei Kreise angedeutet sind. Der erfindungsgemäße Infrarot-Strahler ist in Diagramm (b) durch eine rechteckige Kachel 71 angedeutet. Der kachelförmige Infrarotstrahler 71 und die Anordnung 70 der Carbonstrahler haben dabei die gleiche elektrische Anschlussleistung.

Der Verlauf der Homogenität H mit dem Abstand A ist jeweils durch die gestrichelte Kurvenlinie H, und der Verlauf der Intensität I durch die durchgezogene Kurvenlinie I angezeigt. Demnach nimmt sowohl beim Standard-Flächenstrahler 70 als auch beim erfindungsgemäßen Infrarot-Flächenstrahler 71 die Bestrahlungs-Intensität I mit dem Abstand A in etwa gleichem Maße ab, jedoch ist die Homogenität der Bestrahlung beim erfindungsgemäßen Infrarot-Flächenstrahler 71 weitgehend unabhängig vom Abstand A, wohingegen sie beim Standard-Infrarot-Flächenstrahler bei kurzem Abstand gering ist.

Die grau-schraffierte Fläche definiert schematisch einen "Arbeitsbereich", in dem eine akzeptable Bestrahlungs-Homogenität am Bestrahlungsgut gegeben ist. Es wird deutlich, dass diese Homogenität beim Standard-Infrarot-Flächenstrahler 70 zwar durch Einhaltung eines gewissen Abstandes erreichbar ist, dafür aber eine nennenswerte Einbuße an Bestrahlungs-Intensität in Kauf genommen werden muss. Im Unterscheid dazu ermöglicht der erfindungsgemäße Infrarot-Strahler 71 eine ausreichend hohe Homogenität auch bei sehr geringen Abständen, bei denen gleichzeitig auch die Intensität der Strahlung hoch ist. Somit ist die Effizienz des erfindungsgemäßen Infrarot-Strahlers 71 gegenüber dem Flächenstrahler 70 aus Carbon-Einzelstrahlern - wesentlich verbessert.

Die Prüfung der räumlichen Homogenität der emittierten Strahlung erfolgt nach der IEC 62798 (2014). Dazu wird der Infrarot-Flächenstrahler in eine Prüfvorrichtung eingebaut und auf einem verfahrbaren Tisch montiert. In einem vorgegebenen Arbeitsabstand von 10 mm zur Abstrahlfläche des Infrarotstrahlers wird die optische Leistung mittels eines thermoelektrischen Detektors erfasst. Die Bestrahlungsstärke wird an mehreren Messstellen in Schritten von 5 mm ermittelt. Als ausreichend homogen wird die Bestrahlungsstärke definiert, wenn sie an 10 Messstellen um die Probenmitte um nicht mehr als +/- 5% von dem dabei gemessen Maximalwert abweicht. Diese Art der Messung wird im Folgenden auch als "Axialmessung" bezeichnet,

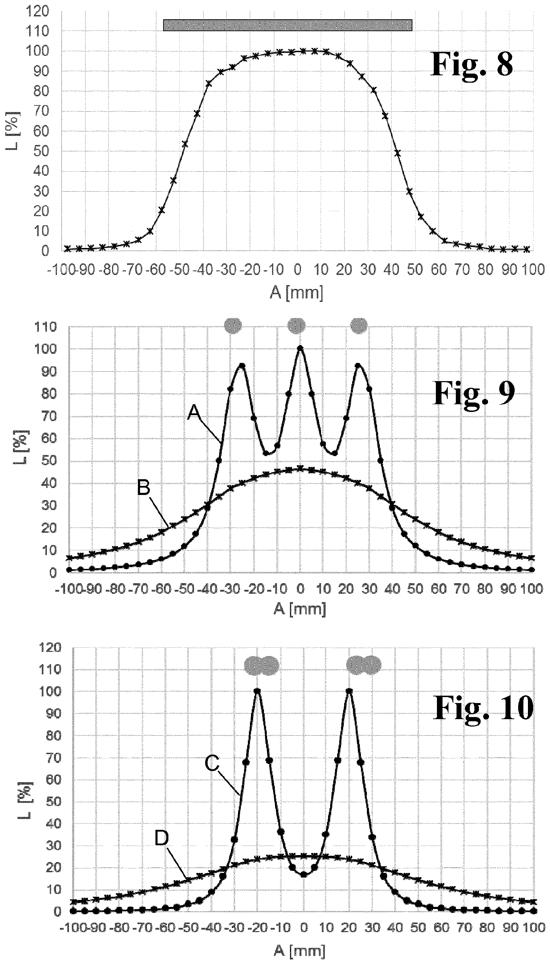

Die Diagramme der Figuren 8 bis 10 veranschaulichen Ergebnis von Axialmessungen bei Einsatz unterschiedlicher Infrarot-Flächenstrahler-Typen. Auf der y-Achse ist jeweils eine normierte optische Leistung L (in %) aufgetragen, und auf der x-Achse der laterale Abstand A (in mm) von einer durch den Achsen-Nullpunkt verlaufenden Mittellinie, die sich entweder auf die laterale Abmessung eines Flächenstrahlers bezieht (Fig. 8) oder auf die laterale Abmessung einer flächigen Anordnung von Einzelstrahlern (Fig. 9, Fig. 10).

**Figur 8** zeigt das laterale Profil der optischen Leistung bei einem erfindungsgemäßen Infrarot-Flächenstrahler, wie etwa dem Infrarot-Flächenstrahler 71 aus Figur 7, gemessen in einem Arbeitsabstand von 10 mm. Dieses liegt über einen größeren Bereich um die Mittellinie vergleichsweise homogen bei nahe 100 %. Dies zeigt sich darin, dass in einem Arbeitsbereich mit mehr als 10 Messpunkten um die Mittellinie die optische Leistung nicht unter 95 % gegenüber dem Maximalwert (100 %) abfällt.

Im Vergleich dazu zeigt **Figur 9** bei einem aus Carbon-Einzelstrahlern zusammengesetzten Infrarot-Flächenstrahler, wie etwa dem Infrarot-Flächenstrahler 70 von Figur 7, dass sich bei dem Standard-Arbeitsabstand von 10 mm (Kurve A) ein inhomogener Verlauf der optischen Leistung L einstellt. Erst bei einem Arbeitsabstand von 40 mm (Kurve B) ergibt sich ein laterales Profil der optischen Leistung mit akzeptabler Homogenität. Die dabei erzielbare optische Leistung an der Heizgut-Oberfläche beträgt aber weniger als 50 % der maximalen Leistung.

Auch eine Axialmessung an einem Infrarot-Flächenstrahler, der als flächige Anordnung so genannter Zwillingsrohrstrahler aufgebaut ist, ergibt ein ähnliches Ergebnis, wie **Figur 10** zeigt. Handelsübliche Zwillingsrohrstrahler verfügen über parallel zueinander verlaufende, räumlich getrennte Kanäle zur Aufnahme von Heiz-Filamenten. Auch hierbei stellt sich bei einem Arbeitsabstand von 10 mm (Kurve C) ein inhomogener Verlauf der optischen Leistung L ein; und erst bei einem Arbeitsabstand von 60 mm (Kurve D) ergibt sich ein laterales Profil der optischen Leistung mit akzeptabler Homogenität. Die dabei an der Heizgut-Oberfläche erreichbare optische Leistung sinkt dadurch allerdings auf weniger als 30 % der maximalen Leistung ab.

**Patentansprüche**

1. Infrarotstrahler, mit einem Substrat (2; 32) aus einem elektrisch isolierenden Werkstoff, das eine Oberfläche (5) aufweist, die in Kontakt mit einer Leiterbahn (3) aus einem elektrisch leitenden und bei Stromdurchfluss Wärme erzeugenden Widerstandsmaterial ist, **dadurch gekennzeichnet, dass** der Substrat-Werkstoff eine amorphe Matrixkomponente umfasst, in die eine im Spektralbereich der Infrarotstrahlung absorbierende Zusatzkomponente eingelagert ist, wobei das Substrat (2; 32) eine der Leiterbahn (3) zugewandte Fläche (5) aufweist, und wobei mindestens ein Teil dieser Fläche (5) mit einer Deckschicht (4) aus porösem Glas belegt ist, wobei in die Deckschicht (4) die Leiterbahn (3) mindestens teilweise eingebettet ist.

2. Infrarotstrahler nach Anspruch 1, **dadurch gekennzeichnet, dass** die Zusatzkomponente in einer Art und Menge vorhanden ist, die im Substrat-Werkstoff bei einer Temperatur von 600 °C einen spektralen Emissionsgrad ε von mindestens 0,6 für Wellenlängen zwischen 2 und 8 $\mu$m bewirkt.

3. Infrarotstrahler nach Anspruch 1 oder 2, **dadurch gekennzeichnet, dass** die Zusatzkomponente in einer Art und Menge vorhanden ist, die im Substrat-Werkstoff bei einer Temperatur von 1000 °C einen spektralen Emissionsgrad ε von mindestens 0,75 für Wellenlängen zwischen 2 und 8 $\mu$m bewirkt.

4. Infrarotstrahler nach einem der vorhergehenden Ansprüche, **dadurch gekennzeichnet, dass** die amorphe Matrixkomponente Quarzglas ist.

5. Infrarotstrahler nach Anspruch 4, **dadurch gekennzeichnet, dass** das Quarzglas eine chemische Reinheit von mindestens 99,99% SiO2 und einen Cristobalitgehalt von höchstens 1% besitzt.

6. Infrarotstrahler nach Anspruch 5, **dadurch gekennzeichnet, dass** der Gewichtsanteil der Zusatzkomponente im Bereich zwischen 0,1 und 5 % liegt.

7. Infrarotstrahler nach einem der vorhergehenden Ansprüche, **dadurch gekennzeichnet, dass** die Zusatzkomponente als separate Zusatzkomponenten-Phase vorliegt und eine nicht-sphärische Morphologie mit maximalen Abmessungen von im Mittel weniger als 20 $\mu$m aufweist.

8. Infrarotstrahler nach Anspruch 7, **dadurch gekennzeichnet, dass** die separate Zusatzkomponenten-Phase maximale Abmessungen von im Mittel mehr als 3 $\mu$m aufweist.

9. Infrarotstrahler nach einem der vorhergehenden Ansprüche, **dadurch gekennzeichnet, dass** die Zusatzkomponente ein Halbleitermaterial in elementarer Form enthält.

10. Infrarotstrahler nach Anspruch 9, **dadurch gekennzeichnet, dass** die Zusatzkomponente elementares Silizium enthält.

11. Infrarotstrahler nach einem der vorhergehenden Ansprüche, **dadurch gekennzeichnet, dass** der Substrat-Werkstoff eine geschlossene Porosität von weniger als 0,5 % und eine spezifische Dichte von mindestens 2,19 g/cm$^3$ aufweist.

12. Infrarotstrahler nach einem der vorhergehenden Ansprüche, **dadurch gekennzeichnet, dass** die Leiterbahn (3) als eingebrannte Dickfilmschicht ausgeführt ist.

13. Infrarotstrahler nach einem der vorhergehenden Ansprüche, **dadurch gekennzeichnet, dass** die Leiterbahn (3) als Linienmuster ausgeführt ist, das eine Fläche des Substrats (2; 32) so bedeckt, dass zwischen benachbarten Leiterbahn-Abschnitten ein Zwischenraum von mindestens 1 mm verbleibt.

14. Infrarotstrahler nach einem der vorhergehenden Ansprüche, **dadurch gekennzeichnet, dass** die Leiterbahn (3) von einer elektrisch isolierenden, gasdichten Schicht bedeckt ist.

**Claims**

1. Infrared emitter, comprising a substrate (2; 32) made of an electrically insulating material that comprises a surface (5) that contacts a conductor track (3) made of a resistor material that is electrically conducting and generates heat when current flows through it, **characterised in that** the substrate material comprises an amorphous matrix component into which an additional component is embedded that absorbs in the spectral range of infrared radiation, and wherein the substrate (2; 32) comprises a surface (5) facing the conductor track (3) and **in that** at least a part of said surface (5) is configured with a cover layer (4) made of porous glass, whereby the conductor track (3) is embedded, at least in part, in said cover layer (4).

2. Infrared emitter according to claim 1, **characterised in that** a type and an amount of the additional component are present such as to effect, in the substrate material at a temperature of 600 °C, an emissivity ε of at least 0.6 for wavelengths between 2 and 8 μm.

3. Infrared emitter according to claim 1 or 2, **characterised in that** a type and an amount of the additional component are present such as to effect, in the substrate material at a temperature of 1000 °C, an emissivity ε of at least 0.75 for wavelengths between 2 and 8 μm.

4. Infrared emitter according to any one of the preceding claims, **characterised in that** the amorphous matrix component is quartz glass.

5. Infrared emitter according to claim 4, **characterised in that** the quartz glass has a chemical purity of at least 99.99% $SiO_2$ and a cristobalite content of at most 1%.

6. Infrared emitter according to claim 5, **characterised in that** the weight fraction of the additional component is in the range of 0.1 to 5%.

7. Infrared emitter according to any one of the preceding claims, **characterised in that** the separate component is present as a separate additional component phase and has a non-spherical morphology with maximal mean dimensions of less than 20 μm.

8. Infrared emitter according to claim 7, **characterised in that** the additional component phase has maximal mean dimensions of more than 3 μm.

9. Infrared emitter according to any one of the preceding claims, **characterised in that** the additional component contains a semiconductor material in elemental form.

10. Infrared emitter according to claim 9 **characterised in that** the additional component contains silicon in elemental form.

11. Infrared emitter according to any one of the preceding claims, **characterised in that** the substrate material shows closed porosity of less than 0.5% and has a specific density of at least 2.19 g/cm³.

12. Infrared emitter according to any one of the preceding claims, **characterised in that** the conductor track (3) is provided as a burnt-in thick-film layer.

13. Infrared emitter according to any one of the preceding claims, **characterised in that** the conductor track (3) is provided as a line pattern covering a surface of the substrate (2; 32) such that an intervening space of at least 1 mm remains between neighbouring sections of the conductor track.

14. Infrared emitter according to any one of the preceding claims, **characterised in that** the conductor track (3) is covered by an electrically insulating, gastight layer.

**Revendications**

1. Radiateur à infrarouge, comprenant un substrat (2 ; 32) en matériau électriquement isolant, qui comporte une surface (5) qui est en contact avec une piste conductrice (3) en matériau résistif électriquement conducteur et générant de la chaleur lorsqu'un courant circule dans celui-ci, **caractérisé en ce que** le matériau de substrat comprend un composant de matrice amorphe, dans lequel est inséré un composant additionnel absorbant dans le domaine spectral du rayonnement infrarouge, le substrat (2 ; 32) comportant une surface (5) orientée vers la piste conductrice (3), et au moins une partie de cette surface (5) étant garnie d'une couche de revêtement (4) en verre poreux, la piste conductrice (3) étant au moins en partie incorporée dans la couche de revêtement (4).

2. Radiateur à infrarouge selon la revendication 1, **caractérisé en ce que** le composant additionnel est présent d'une manière et dans une quantité qui obtiennent dans le matériau de substrat, à une température de 600 °C, une émissivité spectrale ε d'au moins 0,6 pour des longueurs d'onde entre 2 et 8 μm.

3. Radiateur à infrarouge selon la revendication 1 ou 2, **caractérisé en ce que** le composant additionnel est présent d'une manière et dans une quantité qui obtiennent dans le matériau de substrat, à une température de 1000°C, une émissivité spectrale ε d'au moins 0,75 pour des longueurs d'onde entre 2 et 8 μm.

4. Radiateur à infrarouge selon l'une des revendications précédentes, **caractérisé en ce que** le composant de matrice amorphe est du verre de quartz.

5. Radiateur à infrarouge selon la revendication 4, **caractérisé en ce que** le verre de quartz possède une pureté chimique d'au moins 99,99 % de $SiO_2$ et une teneur en cristobalite maximale de 1 %.

6. Radiateur à infrarouge selon la revendication 5, **caractérisé en ce que** la part en poids du composant additionnel est comprise entre 0,1 et 5 %.

7. Radiateur à infrarouge selon l'une des revendications précédentes, **caractérisé en ce que** le composant additionnel est présent sous la forme d'une phase de composant additionnel séparée et présente une morphologie non sphérique avec des dimensions maximales de moins de 20 $\mu$m en moyenne.

8. Radiateur à infrarouge selon la revendication 7, **caractérisé en ce que** la phase de composant additionnel séparée présente des dimensions maximales de plus de 3 $\mu$m en moyenne.

9. Radiateur à infrarouge selon l'une des revendications précédentes, **caractérisé en ce que** le composant additionnel contient un matériau semiconducteur sous forme élémentaire.

10. Radiateur à infrarouge selon la revendication 9, **caractérisé en ce que** le composant additionnel contient du silicium élémentaire.

11. Radiateur à infrarouge selon l'une des revendications précédentes, **caractérisé en ce que** le matériau de substrat présente une porosité fermée inférieure à 0,5 % et une densité spécifique d'au moins 2,19 g/cm$^3$.

12. Radiateur à infrarouge selon l'une des revendications précédentes, **caractérisé en ce que** la piste conductrice (3) est réalisée sous la forme d'une couche de film épais cuite.

13. Radiateur à infrarouge selon l'une des revendications précédentes, **caractérisé en ce que** la piste conductrice (3) est réalisée sous la forme d'un motif de lignes, qui recouvre une surface du substrat (2 ; 32) de telle sorte qu'il reste, entre des portions adjacentes de piste conductrice, un espace intermédiaire d'au moins 1 mm.

14. Radiateur à infrarouge selon l'une des revendications précédentes, **caractérisé en ce que** la piste conductrice (3) est recouverte par une couche étanche aux gaz, électriquement isolante.

**Fig. 1**

**Fig. 2**

**Fig. 3**

**Fig. 4**

**Fig. 5**

**Fig. 6**

**Fig. 7**

Fig. 8

Fig. 9

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011012363 A1
- WO 1999025154 A1
- US 5643483 A
- EP 1185144 A1
- US 2004019882 A1
- US 6118109 A
- WO 2006021416 A1
- WO 2015067688 A1

**In der Beschreibung aufgeführte Nicht-Patentliteratur**

- **J. MANARA ; M. KELLER ; D. KRAUS ; M. ARDUI-NI-SCHUSTER.** DETERMINING THE TRANSMIT-TANCE AND EMITTANCE OF TRANSPARENT AND SEMITRANSPARENT MATERIALS AT ELE-VATED TEMPERATURES. *5th European Thermal-Sciences Conference,* 2008